# EUROPÄISCHE PATENTANMELDUNG

(11) **EP 0 619 224 A1**
(43) Veröffentlichungstag der Anmeldung: **12.10.1994**
(21) Anmeldenummer: 92924952.2
(22) Anmeldetag: 27.11.1992
(51) Int. Cl.: B64C 1/00, B64C 39/08

(54) **LEICHTFLUGZEUG**

(30) Priorität: 27.11.1991 SU 5012784
(71) Anmelder: EGER, Vladimir Sergeevich, Moscow, 125252 (RU)
(72) Erfinder: EGER, Vladimir Sergeevich, Moscow, 125252 (RU)
(74) Vertreter: Nix, Frank Arnold, Dr.
(86) Internationale Anmeldenummer: RU9200216
(87) Internationale Veröffentlichungsnummer: WO9311040

(57) **Zusammenfassung**

Die Erfindung bezieht sich auf die Flugzeugtechnik und betrifft insbesondere die Bauweise sowie die aerodynamische Formgebung leichter Mehrzweckflugzeuge.

Das leichte Mehrzweckflugzeug hat einen Rumpf 1 mit Kabine 2 in der Mitte, in dessen Hinterteil eins Druckschraube in einem Ringmantel 3 angeordnet ist. Der Rumpfvorderteil ist mit einem Pendelhöheleitwerk 4 vom Typ "Ente" versehen. Der Flügel des Flugzeugs ist verkuppelt und besteht aus einem Tiefdeckerflügel 5 und einem Hochdeckerflügel 6 entgegengesetzter Pfeilung. Die Enden der Flügel sind mit Hilfe eines pfeilförmigen Pfeilers 8 verbunden, der mit Seitenrudern 9 versehen ist.

Dank der neuen Bauweise besitzt das Flugzeug ein hohes Auftriebsvermögen und eine gute Stabilität.

## Beschreibung

### Gebiet der Technik

Die Erfindung bezieht sich auf die Flugzeugtechnik und betrifft insbesondere die Bauweise sowie die aerodynamische Formgebung leichter Mehrzweckflugzeuge.

### Bisheriger Stand der Technik

Für kleine leichte Flugzeuge, die mit niedrigen Geschwindigkeiten fliegen, ist die aerodynamische Gestaltung oder die aerodynamische Formgebung besonders wichtig, da sie wesentlich die Flugeigenschaften des Flugzeugs bestimmt.

Die traditionellen alten Gestaltungen der Eindeckerart werden zur Zeit im Hinblick auf die Verbesserung der technischen Kenndaten durch immer kompliziertere ersetzt, deren Wichtigkeit durch die Forderungen des Verbrauchermarktes bedingt wird. Deshalb bekamen Flug- und Betriebseigenschaften des Flugzeugs Bedeutung, die früher die aerodynamische Formgebung nicht beeinflußt haben. Zu diesem Kreis der neuen Eigenschaften, die jetzt von großer Bedeutung sind, gehören: Bequemlichkeit der Flugzeugführung, Ausfallsicherheit und Reservehaltung der Steuerflächen, ausfallsichere Bauweise, variable Stabilität usw. Andererseits ermöglichen die Erfolge auf dem Gebiet der Aerodynamik und die Vervollkommnung der Rechenverfahren ein freieres Verhalten gegenüber den bereits überprüften Lösungen, die zu verlassen früher wegen der Unbekanntheit der Folgen gefährlich war.

Deshalb ist in der letzten Zeit die Anzahl origineller Gestaltungen und Formgebungslösungen, insbesondere auf dem Gebiet des leichten Flugzeugwesens stark gestiegen.

Der vorgeschlagenen technischen Lösung ähnlich sind:
- Flugzeuge mit Anordnung einer Druckschraube in einem Ringmantel, wie "Fantrainer" der Firma "Rhein-Flugzeugbau" (BRD) und "Optika" der Firma Adgly (England);
- Flugzeuge mit verkuppeltem Flügel, die eine Entwicklung der Doppeldeckergestaltung darstellen und zur Zeit in den NASA Windkanälen (USA) für große Handelsflugzeuge intensiv untersucht werden (FLIGHT INTERNATIONAL, 4, 1987, S. 16).

Die dem Vorschlag am nächsten stehende technische Lösung ist die Konstruktion, die nur in einem Flugzeug als Eigenbau von dem tschechischen Emigranten Charles Ligeti in Australien - LGT Stratos realisiert wurde (FLIGHT INTERNATIONAL, 6, 1986, S. 46).

Es ist dies ein einsitziges Flugzeug vom Typ Motorsegler mit einem verkuppelten Flügel in Form eines Tief- und eines Hochdeckerflügels, die rückwärts gepfeilt und an den Enden durch einen Pfeiler verbunden sind. Im Rumpfhinterteil ist eine ummantelte Druckschraube angeordnet.

Zu den Nachteilen der beschriebenen Gestaltung des Flugzeugs gehört die Problematik der Betriebskenndaten, die von Flugzeugen dieser Klasse gefordert werden, die für den Transport von mehr als drei Fluggästen auf Charter- und Linienflügen mit einer Flugstrecke bis 1500 km bei unbefestigten Pisten vorgesehen sind.

### Offenbarung der Erfindung

Der Erfindung liegt die Aufgabe der Schaffung eines leichten Mehrzweckflugzeuges mit hohem Auftriebsvermögen und hoher Stabilität zugrunde.

Die gestellte Aufgabe wird bei einem Leichtflugzeug mit einem verkuppelten Flügel aus einem Tiefdecker- und einem Hochdeckerflügel, die an den Enden mit Hilfe eines Pfeilers verbunden sind und mit einer im Rumpfhinterteil angeordneten Druckschraube in einem Ringmantel dadurch gelöst, daß der obere Flügel und der untere Flügel in Richtung der Flugzeugachse mit Abstand voneinander angeordnet sind und entgegengesetzte Pfeilung aufweisen, wobei sie in der Draufsicht die Form eines Rhombus bilden, sowie dadurch, daß Mittel zur Steuerung der Längsneigung und ein Mittel zur Steuerung der Richtung vorgesehen sind.

In einer bevorzugten Ausführungsvariante kann der untere Flügel eine Rückwärts- und der obere Flügel eine Vorwärtspfeilung haben. Die unterschiedliche Pfeilung des Tiefdecker- und des Hochdeckerflügels ermöglicht es, die Vorteile der Flügelumströmung optimal zu kombinieren, wodurch eine gleichmäßigere Verteilung der Auftriebskraft längs der Spannweite (der Zirkulation) bewirkt wird.

Der Oberflügel kann am oberen Teil des Druckschraubenringmantels angeordnet werden. Die Variante einer Anordnung des Hochdeckerflügels mit Vorwärtspfeilung am oberen Teil des Druckschraubenringmantels ermöglicht es, diesen Flügel von der Strömungsablösung vom Tiefdeckerflügel bei großen Anstellwinkeln zu isolieren, und zwar infolge der Absaugung des abgelösten Luftstroms durch die Schraube.

Der untere Flügel mit Vorwärtspfeilung kann am unteren Teil der Druckschraube angeordnet sein.

Der Abstand der Wurzel- und der Endquerschnitte des Flügels in Höhenrichtung kann unter Bildung symmetrischer Trapeze verschieden ausgeführt werden.

Es ist zweckmäßig, wenn der Höhenabstand im Wurzelquerschnitt des Flügels zumindest einer Länge seiner Wurzelsehne gleich ist, und daß der Abstand längs der Achse im Wurzelquerschnitt entsprechend den geometrischen Abmessungen des Rumpfes ausgeführt ist. Bevorzugt ist der Höhenabstand im Endquerschnitt vergleichbar mit der Sehne des Endquerschnitts des Flügels auszuführen, während es vorteilhaft ist, den Abstand der Flügel längs der Achse im Endquerschnitt entsprechend den geometrischen Abmessungen des Rumpfes auszuführen.Die Verbindung der Flügelenden mit Hilfe der Pfeiler ermöglicht die Herstellung einer starren Kraftkonstruktion - eines "Flügelkastens", wodurch in der Frontansicht zwei symmetrische Trapeze gebildet werden. Eine solche Bauweise vermindert die Verformung in den Wurzelquerschnitten der Flügel und erhöht die Ermüdungsfestigkeit und in Verbindung mit der gesamten Gestaltung auch die allgemeine und die dynamische Festigkeit des Flugzeugs.

Durch verschiedene V-Stellung der Flügel wird der größte vertikale Abstand der Wurzelquerschnitte beider Flügel ermöglicht und werden Bedingungen geschaffen, mit Hilfe des die Flügelenden verbindenden pfeilförmigen Pfeilers einen bezüglich der Kräfte starren Flügelkasten zu schaffen. Dabei wird die Verformung in den Wurzelquerschnitten der Flügel wesentlich herabgesetzt und die Ermüdungsfestigkeit des Flugzeugs vergrößert, was für Epoxidharz-Verbundwerkstoffe, die durch geringe Biegfestigkeit gekennzeichnet sind, sehr wichtig ist.

Letzten Endes ermöglicht die Bauweise des verkuppelten Flügels in Vereinigung mit der allgemeinen Gestaltung eine Herabsetzung der Masse des Flugzeugs, eine Erhöhung der rechnerischen Belastung sowie der allgemeinen und der dynamischen Festigkeit.

Das angemeldete Verhältnis der Abstände der Sehnen der End- und der Wurzelquerschnitte der Flügel in Höhen- und Längsrichtung wurde aus den Ergebnissen von Windkanalversuchen erhalten. Die Berechnung des Abstandes zwischen den Sehnen ermöglicht es, eine Umströmung bei überkritischen Zuständen zur Vermeidung eines Überganges des Flugzeugs ins Trudeln zu erzielen.

Gemäß einer der Ausführungsvarianten ist das Mittel zur Steuerung der Längsneigung in Form eines vorderen Höhenleitwerks vom Typ "Ente" ausgeführt.

Ein vorderes Höhenleitwerk vom Typ "Ente" ermöglicht eine wesentliche Erhöhung des Auftriebsvermögens des Flugzeugs und verbessert seine Stabilität.

Das Vorhandensein eines Pendelhöhenleitwerks vom Typ "Ente" erhöht wesentlich die Steuerbarkeit des Flugzeugs bei großen Wanderungen des Schwerpunkts, da es in Abhängigkeit von dem Einstellwinkel den Druckpunkt nach vorne versetzt, wodurch der Stabilitätsgrad des Flugzeugs geregelt wird.

Die Längsneigungssteuerung wird mit Hilfe der an den Flügeln befindlichen Höhenruder und durch Benutzung des vorderen Höhenleitwerks bewirkt. Die gleichzeitige Anwendung dieser Mittel ermöglicht eine unmittelbare Steuerung der Auftriebskraft. Die Anordnung von Höhenrudern am Hochdeckerflügel benutzt den Flügel als zusätzliches Höhenleitwerk (Höhenflosse), wodurch die Wirksamkeit der Flugzeugsteuerung im normalen Flugzustand erhöht wird.

Die Richtungssteuerung erfolgt mit Hilfe von Seitenrudern an den Endpfeilern und an der Seitenflosse. Eine gleichzeitige Anwendung dieser Mittel ermöglicht eine unmittelbare Steuerung der Seitenkraft.

Gemäß einer anderen Ausführungsvariante ist zusätzlich ein Seitenruder im Luftschraubenstrom vorgesehen, das als Fortsetzung der Seitenflosse ausgebildet ist. Ein ebensolches Stromruder ist auch in der Horizontalebene zur Längsneigungssteuerung bei geringen Fluggeschwindigkeiten möglich, wenn alle anderen Mittel weniger wirksam sind.

### Kurze Beschreibung der Zeichnungen

Die Erfindung wird anhand von Ausführungsbeispielen mit Hilfe der Zeichnungen näher erläutert. Auf diesen sind dargestellt:
Fig. 1 - die schematische Darstellung des Flugzeugs in einer Seitenansicht;
Fig. 2 - das Flugzeug in der Frontansicht;

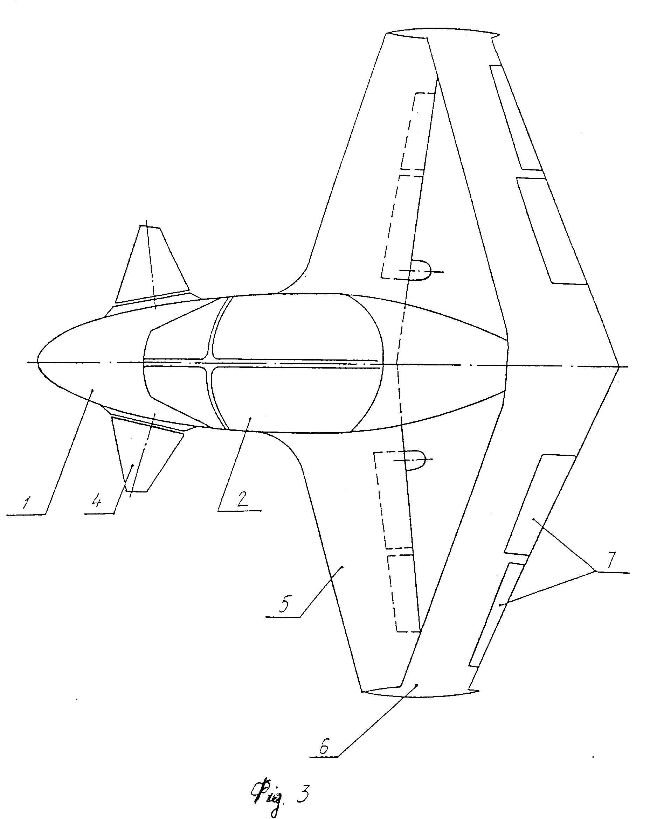

Fig. 3 - das Flugzeug in der Draufsicht;
Fig. 4 - die schematische Darstellung einer Variante des Flugzeugs in einer Seitenansicht;
Fig. 5 - das Flugzeug in der Frontansicht;
Fig. 6 - das Flugzeug in der Draufsicht;
Fig. 7 - schematische Darstellung anderer Ausführungsvarianten des Flugzeugs.

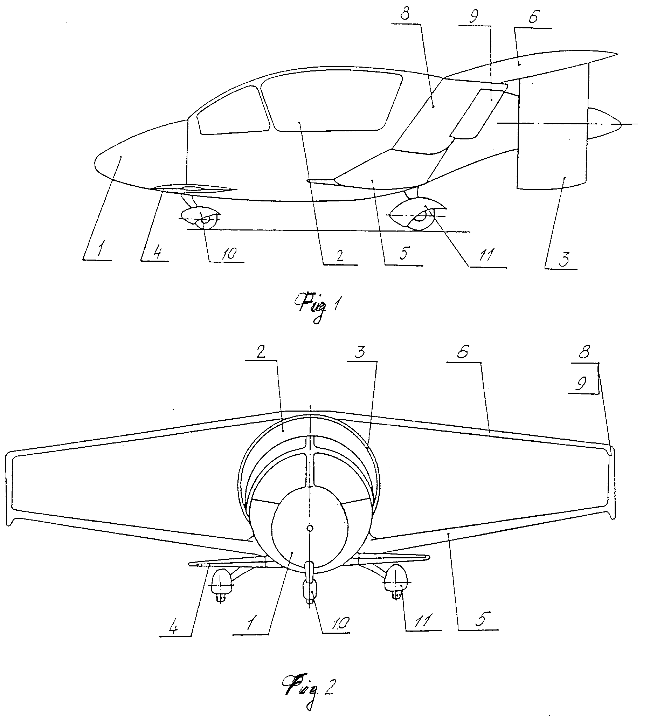

Das leichte Mehrzweckflugzeug hat einen Rumpf 1 mit einer Kabine 2 in der Mitte. Im Rumpfhinterteil ist eine Druckschraube in einem Ringmantel 3 angeordnet. Am Rumpfvorderteil ist ein Pendel-Höhenleitwerk vom Typ "Ente" angeordnet (Fig. 1).

Der Flügel des Flugzeugs ist verkuppelt (Fig. 1) und besteht aus einem Tiefdeckerflügel 5 mit Rückwärtspfeilung und einem Hochdeckerflügel 6 mit Vorwärtspfeilung, der am oberen Teil des Ringmantels 3 angeordnet und mit Höhenrudern 7 versehen ist.

Die Enden der Flügel sind mit Hilfe eines pfeilförmigen Pfeilers 8 verbunden, der mit Seitenrudern 9 versehen ist.

Am Rumpf ist das Bugfahrwerk 10 und das Hauptfahrwerk 11 befestigt.

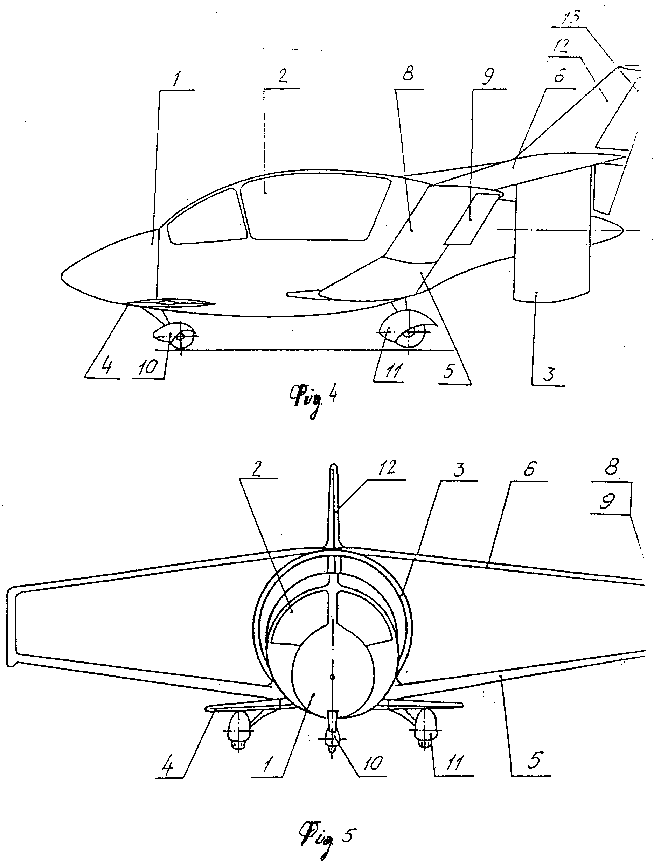

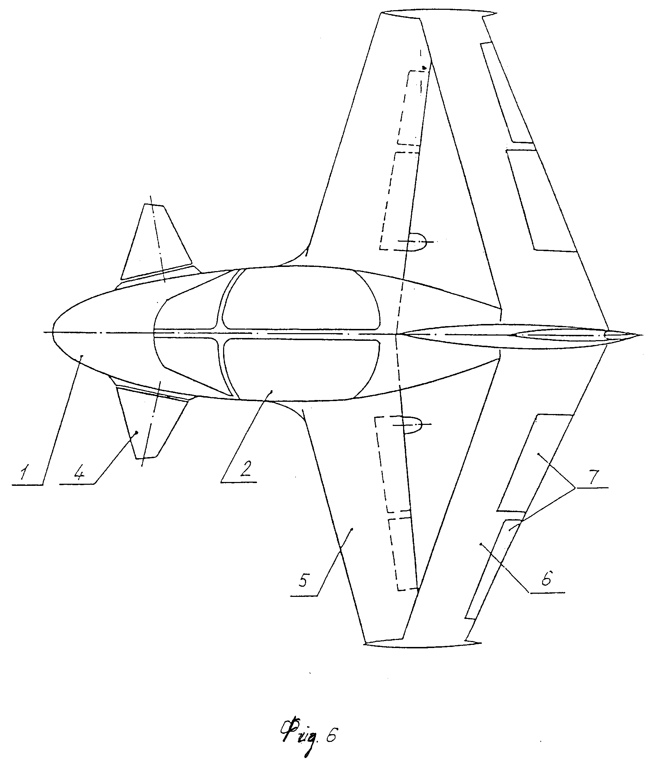

Die konstruktive Lösung der Variante des Flugzeugs laut Fig. 2* geht aus von der Anordnung einer Seitenflosse mit Seitenrudern 13 am oberen Teil des Druckschraubenringmantels 3.
* Anm. des Übersetzers: richtig ist "Fig. 4 - 6"

Bei der Realisierung dieser Variante hat der pfeilförmige Pfeiler 8 Seitenruder 9 oder er hat keine.

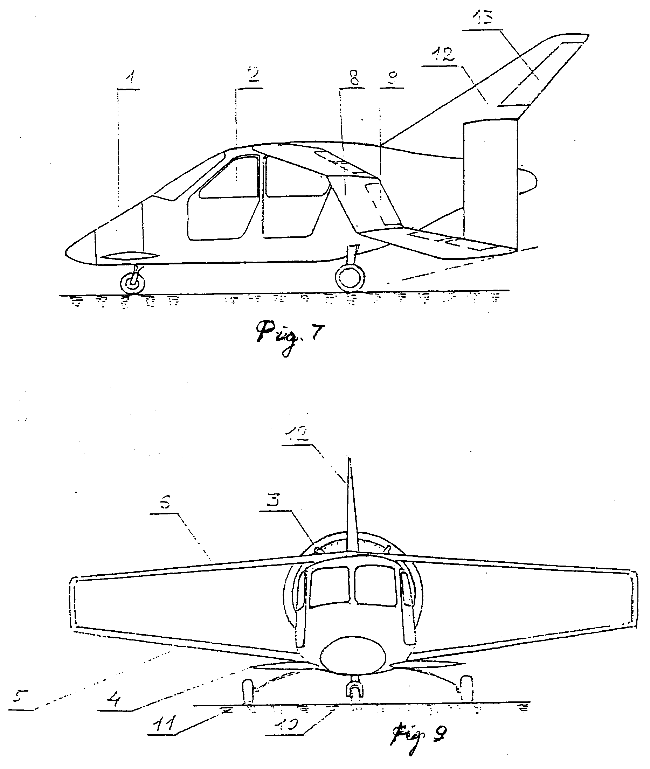

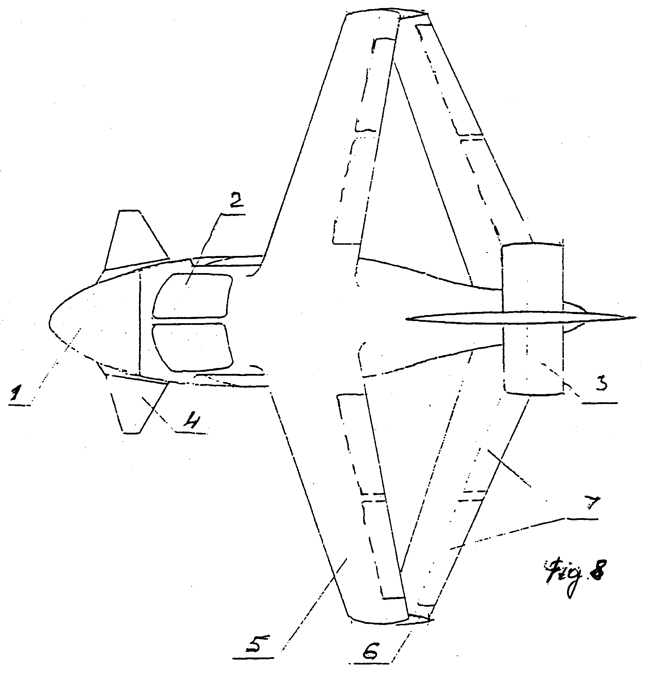

In den Fig. 7 - 9 ist die Ausführungsvariante eines Flugzeugs mit verkuppeltem Flügel, mit oberer Anordnung des rückwärts gepfeilten Flügels 5 und mit einem vorwärts gepfeilten Tiefdeckerflügel 6, der am unteren Teil des Mantelrings 3 befestigt und mit den Höhenrudern 7 versehen ist, dargestellt.

Die Enden der Flügel sind mit Hilfe eines pfeilförmigen Pfeilers 8 verbunden, der mit Seitenrudern 9 versehen ist.

Im oberen Teil des Rumpfes ist eine Seitenflosse 12 angeordnet, die mit den Seitenrudern 13 versehen ist.

Das angemeldete Flugzeug besitzt eine Reihe von Vorteilen, und zwar insbesondere:
- hohes Antriebsvermögen,
- Verbesserung der Stabilität und der Steuerbarkeit,
- Erhöhung der Ermüdungsfestigkeit,
- unmittelbare Steuerung der Seiten- und der Auftriebskraft,
- Sicherheit und Bequemlichkeit der Flugzeugführung.

Die angemeldete Bauweise eines leichten Mehrzweckflugzeugs wurde bei der Entwicklung des Flugzeugs "SAWIAT-E-1" verwirklicht, das aus Glasfaser-Verbundwerkstoffen hergestellt wurde.

Bei privater Anwendung ist das Flugzeug für die Nutzung durch einen unbeschulten Flieger gedacht, der nur einen Grundausbildungskursus absolviert hat. Bei der Entwicklung wurde mit der Möglichkeit einer Landung des Flugzeugs auf einer Autostraße, einer Stadtstraße und auf anderem, für die Landung eines Flugzeugs nicht vorgesehenem Gelände gerechnet.

Hiervon ausgehend wurde die Flügelspannweite mit 7 m, die Länge des Flugzeugs mit etwa 6 m und der Rumpfdurchmesser mit etwa 1,5 m gewählt. Die Anordnung der Druckschraube schützt den Motor vor dem Auftreffen von Fremdkörpern.

Die Daten der Windkanalversuche zeugen vom Erreichen des gestellten Ziels, einer Optimierung der aerodynamischen Güte des Flugzeugs im Ganzen, wodurch die Flugsicherheit und leichte Flugzeugführung gewährleistet werden.

### Industrielle Anwendbarkeit

Die einzelnen Elemente der vorgeschlagenen aerodynamischen Gestaltung des Seglers können in der Konstruktion von Stauflügelgeräten, Luftkissenschiffen, Gleitschiffen, Tragflügelbooten sowie von Rennkraftwagen benutzt werden.

## Patentansprüche

1. Leichtflugzeug mit einem verkuppelten Flügel aus einem Tiefdecker- und einem Hochdeckerflügel, die an den Enden mit Hilfe eines Pfeilers verbunden sind und einer im Rumpfhinterteil angeordneten Druckschraube in einem Ringmantel,
dadurch gekennzeichnet, daß der obere Flügel und der untere Flügel in Richtung der Flugzeugachse mit Abstand voneinander angeordnet sind und entgegengesetzte Pfeilung aufweisen, wobei sie in der Draufsicht die Form eines Rhombus bilden,
und daß Mittel zur Steuerung der Längsneigung und ein Mittel zur Steuerung der Richtung vorgesehen sind.

2. Flugzeug nach Anspruch 1, dadurch gekennzeichnet, daß der untere Flügel mit Rückwärtspfeilung und der obere mit Vorwärtspfeilung ausgeführt sind.

3. Flugzeug nach Anspruch 1 oder 2, dadurch gekennzeichnet, daß der obere Flügel am oberen Teil des Ringmantels der Druckschraube angeordnet ist.

4. Flugzeug nach Anspruch 1, dadurch gekennzeichnet, daß der vorwärtsgepfeilte untere Flügel am unteren Teil des Ringmantels der Druckschraube angeordnet ist.

5. Flugzeug nach Anspruch 1 bis 4, dadurch gekennzeichnet, daß die Flügelquerschnitte an der Wurzel und am Ende unter Bildung symmetrischer Trapeze verschiedene Abstände in Höhenrichtung aufweisen.

6. Flugzeug nach Anspruch 5, dadurch gekennzeichnet, daß der Höhenabstand im Flügelwurzelquerschnitt zumindest eine Länge der Wurzelsehne beträgt, und daß der Abstand der Wurzelquerschnitte der Flügel längs der Achse entsprechend den geometrischen Abmessungen des Rumpfes ausgeführt ist.

7. Flugzeug nach Anspruch 5 oder 6, dadurch gekennzeichnet, daß der Höhenabstand der Flügel im Endquerschnitt kommensurabel mit der Sehne des Endquerschnitts ausgeführt ist, und daß der Abstand der Endquerschnitte der Flügel längs der Achse entsprechend den geometrischen Abmessungen des Rumpfes ausgeführt ist.

8. Flugzeug nach Anspruch 1 bis 7, dadurch gekennzeichnet, daß das Mittel zur Steuerung der Längsneigung in Form eines vorderen Höhenleitwerks vom Typ "Ente" ausgeführt ist.

9. Flugzeug nach Anspruch 8, dadurch gekennzeichnet, daß das vordere Höhenleitwerk als Pendelleitwerk ausgeführt ist.

10. Flugzeug nach Anspruch 1 bis 9, dadurch gekennzeichnet, daß das Mittel zur Längsneigungssteuerung in Form von Höhenrudern ausgeführt ist.

11. Flugzeug nach Anspruch 1 bis 10, dadurch gekennzeichnet, daß die Höhenruder am hinteren Flügel ausgeführt sind.

12. Flugzeug nach Anspruch 1 bis 11, dadurch gekennzeichnet, daß die Höhenruder am vorderen Flügel ausgeführt sind.

13. Flugzeug nach Anspruch 1 bis 12, dadurch gekennzeichnet, daß zusätzlich ein Ruder im Schraubenluftstrom in der Horizontalebene vorgesehen ist.

14. Flugzeug nach Anspruch 1 bis 13, dadurch gekennzeichnet, daß das Mittel zur Richtungssteuerung in Form von Seitenrudern ausgeführt ist.

15. Flugzeug nach Anspruch 14, dadurch gekennzeichnet, daß die Seitenruder an den Endpfeilern angeordnet sind.

16. Flugzeug nach Anspruch 15, dadurch gekennzeichnet, daß die Seitenruder mit der Möglichkeit eines Ausschlagens nach außen ausgeführt sind.

17. Flugzeug nach Anspruch 14, dadurch gekennzeichnet, daß die Seitenruder an einer Seitenflosse ausgeführt sind.

18. Flugzeug nach Anspruch 1 bis 15, dadurch gekennzeichnet, daß das Mittel zur Richtungssteuerung in Form einer Pendelseitenflosse ausgebildet ist.

19. Flugzeug nach Anspruch 1 bis 18, dadurch gekennzeichnet, daß zusätzlich ein Seiteruder im Luftstrom der Druckschraube vorgesehen ist, das in Form einer Fortsetzung der Seitenflosse ausgebildet ist.
